# EUROPÄISCHE PATENTSCHRIFT

(11) **EP 2 830 720 B1**
(45) Veröffentlichungstag und Bekanntmachung des Hinweises auf die Patenterteilung: **25.10.2017**
(21) Anmeldenummer: 13713720.4
(22) Anmeldetag: 26.03.2013
(51) Int. Cl.: A63B 29/02, G01S 3/04, G01S 3/14, H04B 1/38, G01S 11/06, H01Q 1/27, H01Q 7/08, H01Q 21/24

(54) **TRAGBARE VORRICHTUNG ZUM SUCHEN UND/ODER ZUR ORTUNG VON SENDERN**
PORTABLE DEVICE FOR SEARCHING AND/OR LOCATING TRANSMITTERS
DISPOSITIF PORTATIF POUR CHERCHER ET/OU LOCALISER DES ÉMETTEURS

(30) Priorität: 30.03.2012 CH 451122012
(43) Veröffentlichungstag der Anmeldung: 04.02.2015
(73) Patentinhaber: Ortovox Sportartikel GmbH, 82024 Taufkirchen (DE)
(72) Erfinder: WÜRGLER, Marcel, 8416 Flaach (CH)
(86) Internationale Anmeldenummer: PCT/CH2013/000053
(87) Internationale Veröffentlichungsnummer: WO 2013/143015

(56) Entgegenhaltungen:
- EP-A2- 1 439 400
- DE-A1- 2 601 209
- DE-A1- 3 031 394
- DE-U1-202009 012 371
- US-A- 4 850 031
- US-A1- 2005 151 662

## Beschreibung

Die vorliegende Erfindung bezieht sich auf eine tragbare Vorrichtung zum Suchen und/oder zur Ortung von Sendern gemäss dem Oberbegriff des Anspruchs 1.

Tragbare Suchgeräte zum Suchen und/oder zur Ortung von beispielsweise in Lawinen verschütteten Personen, im folgenden Lawinenverschütteten-Suchgeräte oder kurz LVS genannt, gehören heute zur Grundausrüstung der Bergsteiger, Snowboarder und Skifahrer, welche sich abseits gesicherter Pisten bewegen. Derartige Geräte sind beispielsweise in US 2005/0151662A1, EP 1 577 679 A1 und EP 1 439 400 A2 beschrieben.

Die US 2005/0151662 A1 beschreibt ein batteriegetriebenes Sende- und Empfangsgerät, bei welchem ein Mikroprozessor in einem Deckel eines Gehäuses des Sende- und Empfangsgeräts angeordnet ist. In dem Deckel sind des Weiteren eine Antenne und eine Anzeige angeordnet. Räumlich von dieser ersten Antenne getrennt sind in einem Hauptgehäuse des Sende- und Empfangsgeräts zwei weitere Antennen angeordnet. Der Mikroprozessor ist mit einem Empfängerchip ausgestattet. Die Antennen weisen bevorzugt Wicklungen auf.

Die DE 30 31 394 A1 beschreibt ein Gerät zur Markierung lawinenverschütteter Personen, wobei zwei Sender in einem gemeinsamen Gerätegehäuse angeordnet sind. Zwischen den beiden Sendern kann eine Schirmung etwa in Form von dem Betreiben der Sender dienenden Batterien vorgesehen sein.

Die DE 26 01 209 A1 beschreibt ein Gerät zur Markierung lawinenverschütteter Personen, bei welchem ein Empfänger und ein Markierungssender zu einem gemeinsamen Gerät zusammengebaut sind. Hierbei können zwei Sender verschiedener Frequenz zu einer Baueinheit vereinigt sein.

Die US 4 850 031 A beschreibt ein Alarmsystem zum Orten von Personen in Lawinen, welches über ein Kabel mit einem Fotodetektor und einem Fotovoltaikelement verbunden ist. Hierbei umfasst das Alarmsystem zwei Antennen, welche unter einer Abdeckung angeordnet sind. Ein Gehäuse des Alarmsystems, an welchem die Abdeckung beweglich befestigt ist, kann in einer Tasche eines Kleidungsstücks angeordnet sein.

Ein LVS befindet sich normalerweise im Sendemodus. Das LVS sendet in periodischen Abständen ein kurzes Signal aus. Im Falle eines Lawinenniederganges können die nicht verschütteten Personen ihr LVS in einen Empfangsmodus umschalten. In dieser Betriebsart können die verschütteten Sender, und damit die Personen, mittels Peilverfahren geortet werden.

Für LVS ist international die Sendefrequenz von 457000 Hz normiert. Für Signale in diesem Frequenzbereich verwendet man vorzugsweise Ferritantennen, angefertigt aus einem Kern aus Ferrit und einer den Kern umfassenden spulenförmigen Wicklung. Derartige Antennen haben die Eigenschaft, dass die Stärke des an den Enden der Wicklung verfügbaren Signales abhängig ist vom Winkel zwischen den einfallenden Feldlinien und der Normalen zur Ebene der Wicklungen. Die Wicklungen der Antennen stellen elektrisch gesehen eine Induktivität dar. Im Weiteren werden derartige Antennen mittels Kondensatoren zu einem Schwingkreis erweitert, dessen Resonanzfrequenz gegeben ist durch die Induktivität der Wicklungen der Antennen und die Kapazitäten der Kondensatoren. In der Umgebung der Resonanzfrequenz dieser Schwingkreise ergibt sich dann eine höhere Empfindlichkeit der Antennen, welche zu einer Verbesserung der Reichweite genutzt werden kann. Gleichzeitig kann diese Resonanz dazu ausgenützt werden, unerwünschte Signale mit benachbarten Frequenzen zu unterdrücken. Die Ausführung als Ferritantenne hat den Vorteil, dass die Antennen sehr kompakt sind und somit in das Gehäuse eines LVS integriert werden können.

Die neueren LVS verfügen In der Mehrzahl über drei orthogonal angeordnete Ferritantennen, um im Empfänger sowohl die Intensität des empfangenen Signales als auch die Richtung der von einem sendenden LVS ausgehenden magnetischen Feldlinien relativ zur räumlichen Ausrichtung des empfangenden LVS zu bestimmen. Das empfangende LVS wird durch den Benutzer in der Regel so gehalten, dass die Hauptebene des LVS parallel zur Fläche liegt, welche abgesucht werden soll. Für die Bestimmung der Suchrichtung sind vor allem die Signale von den Antennen von Nutzen, deren Normalen zu der Fläche, welche von den Wicklungen eingeschlossen wird, in der Hauptebene des LVS liegen. Die dritte Antenne, oft als Z-Antenne bezeichnet, wird nur verwendet, um in besonderen Situationen im Nahbereich die Suche zu erleichtern. Mit Hilfe der Signale von den Antennen, deren Normalen in der Hauptebene des LVS liegen, kann der suchenden Person nicht nur eine Angabe gemacht werden über die Distanz zum sendenden LVS, sondern auch über die Richtung der Projektion der Feldlinien auf die Hauptebene des empfangenden LVS. Folgt eine suchende Person dieser Richtung, so wird sie auf einem gekrümmten Pfad zum sendenden LVS geführt. Ein derartiges LVS wird beispielsweise in der oben genannten EP 1 439 400 A2 beschrieben.

Alle bekannten LVS integrieren die Antennen zusammen mit einem Empfänger und einer Anzeigeeinheit, welche vorzugsweise in Flüssigkristall-Technologie ausgeführt ist, in ein Gehäuse. Dabei ist bei allen bekannten LVS der Rechner, welcher im Empfänger verwendet wird, um die empfangenen Signale mittels digitaler Signalverarbeitung aufzuarbeiten, eine wesentliche Quelle von Störsignalen.

Die Verwendung einer Ferritantenne im Inneren eines Gehäuses hat den Nachteil, dass die Störsignale, welche durch den Rechner und durch die in den meisten LVS verwendete Flüssigkristall-Anzeige erzeugt werden, aufgrund der kurzen Distanz zu den Wicklungen der Antennen sehr stark in die Wicklungen der Antennen eingekoppelt werden. Die magnetische Feldstärke H, welche massgebend ist für die in den Wicklungen der Antennen induzierte Spannung, ist umgekehrt proportional zum Abstand der Wicklungen der Antennen von den Störquellen. Deshalb nehmen die eingekoppelten Störsignale mit zunehmendem Abstand der Wicklungen der Antennen von den Störquellen ab.

Das in DE 20 2009 012 371 U1 beschriebene LVS weist mindestens zwei Sende-Empfangs-Module und/oder Antennen auf. Dabei ist mindestens ein Sende-Empfangs-Modul oder eine Antenne vom LVS abtrennbar und entfernbar und bleibt dabei mit dem LVS funktionell verbunden. Die Suche nach einem zu ortenden Sender erfolgt mittels Triangulation über ein Ortungsdreieck, respektive über eine Ortungspyramide.

Anspruch 1 von WO 2006/031789 A2 bezieht sich auf eine Antenne für die Anwendung in Bohrlöchern. Gemäss einer bevorzugten Ausführungsform ist die Antennenspule aus Litzendraht hergestellt

Anspruch 1 von WO 2006/11391 B A2 bezieht sich auf eine flexible elektrische Schaltung, welche ein nicht leitendes Trägermaterial und mindestens einen Leiter, welcher auf dem Trägermaterial aufgebracht ist, umfasst

Es ist eine Aufgabe der vorliegenden Erfindung, eine tragbare Vorrichtung zum Suchen und/oder zur Ortung von Sendern, welche insbesondere von Personen oder Tieren getragen werden oder an Gegenständen befestigt sind, zur Verfügung zu stellen.

Mit dieser tragbaren Vorrichtung soll es möglich sein, die Wicklungen der Antennen ohne Beeinträchtigung eines Benutzers derart anzuordnen, dass durch die grössere Distanz zwischen den genannten Störquellen und den Wicklungen der Antennen die in die Wicklungen der Antennen eingekoppelte Störspannung reduziert wird.

Diese Aufgabe wird, ausgehend von einem herkömmlichen LVS, dadurch gelöst dass die Wicklungen derjenigen Antennen, welche weniger Störsignale empfangen sollen, in grösstmöglicher Entfernung von den genannten Störquellen angeordnet werden. Diese Wicklungen sind in einer auf dem Körper einer suchenden Person getragenen Vorrichtung integriert, nämlich in einem Kleidungsstück oder in einer auf dem Körper getragenen Schutzvorrichtung. Zur Kompensation des Effektes der nicht mehr verwendeten Ferritkerne werden als Folge dieser Anordnung die durch die Wicklungen der Antennen eingeschlossenen Flächen vergrössert.

Diese Ausführungsform hat den Vorteil, dass trotz der grösseren Entfernung der Wicklungen der Antennen von den Störquellen keine unförmige und/oder schwer zu handhabende Vorrichtung vorliegt. Zudem wird das Gesamtgewicht infolge des Wegfallens der schweren Ferritkerne reduziert. Die Ferritkerne sind zudem schlagempfindlich; ihr Wegfallen führt zu einer verbesserten Robustheit der Vorrichtung.

Eine Integration der Wicklungen der Antennen in einen Rucksack ist weniger vorteilhaft, weil dieser in gewissen Situationen vom Benutzer getrennt werden kann. Damit ist nicht mehr sichergestellt, dass der Benutzer in jeder Situation, beispielsweise im Falle einer Nachlawine, fest mit einem LVS im Sendemodus verbunden ist.

Die vorliegende Erfindung ist durch die Merkmale in den unabhängigen Ansprüchen gekennzeichnet. Bevorzugte Ausführungsformen werden in den abhängigen Ansprüchen definiert.

Die vorliegende Erfindung wird nachfolgend anhand von möglichen Ausführungsformen näher erläutert. Dabei wird auch Bezug auf die Figuren genommen.

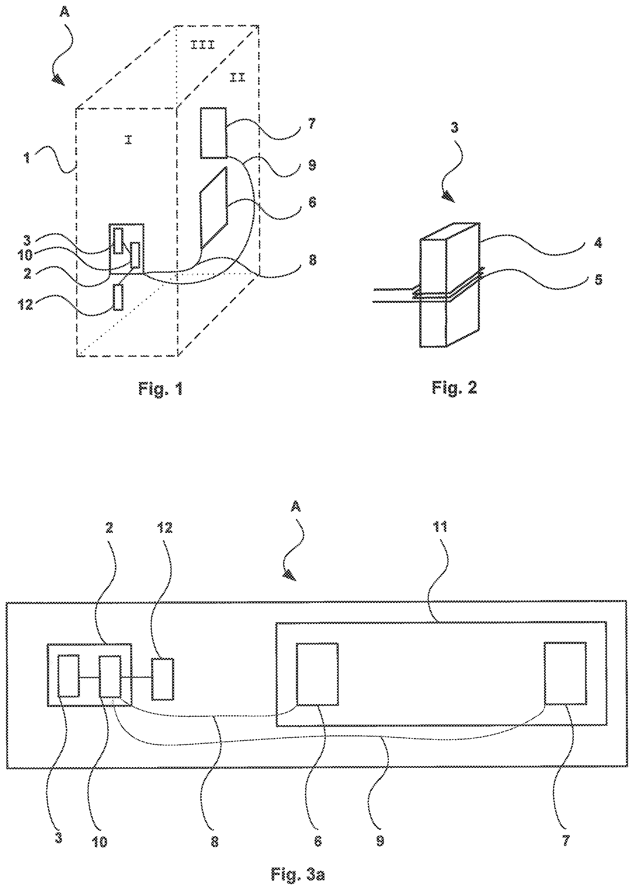

Figur 1 zeigt schematisch eine perspektivische Darstellung einer möglichen Ausführungsform einer erfindungsgemässen tragbaren Vorrichtung A. Dabei sind die Wicklungen 6 und 7 von zwei Antennen entfernt von einem in einer ersten Haltevorrichtung 2 angeordneten Empfänger 10 angeordnet.

Figur 2 zeigt schematisch eine Ferritantenne 3, umfassend einen Kern 4 aus Ferrit und eine diesen Kern 4 umfassende Wicklung 5.

Figur 3a zeigt schematisch eine erfindungsgemässe tragbare Vorrichtung A, in welcher die Wicklungen 6 und 7 von zwei Antennen in einer gemeinsamen zweiten Haltevorrichtung 11 angeordnet sind.

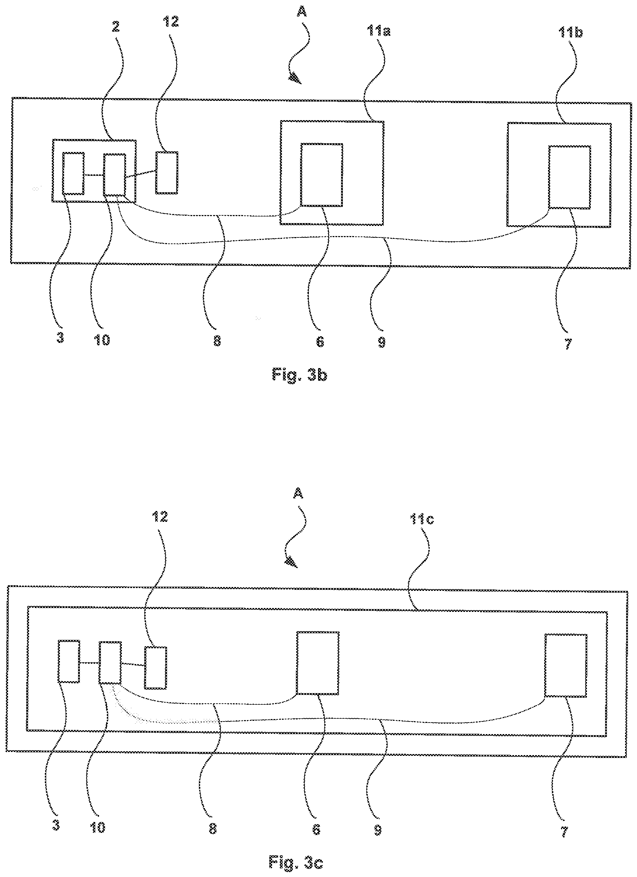

Figur 3b zeigt schematisch eine erfindungsgemässe tragbare Vorrichtung A, in welcher die Wicklungen 6 und 7 von zwei Antennen je in einer separaten dritten Haltevorrichtung 11a und in einer separaten vierten Haltevorrichtung 11b angeordnet sind.

Figur 3c zeigt schematisch eine erfindungsgemässe tragbare Vorrichtung A, in welcher die Wicklung 6 der zweiten Antenne und die Wicklung 7 der dritten Antenne sowie deren Zuleitungen 8 und 9, der Empfänger 10, die erste Antenne 3, und die Energiequelle 12 in einer gemeinsamen fünften Haltevorrichtung 11c angeordnet sind.

Bei möglichen Ausführungsformen kann die erste Antenne 3, umfassend den Kern 4 aus Ferrit und die Wicklung 5, in die erste Haltevorrichtung 2 integriert sein.

Die erste Haltevorrichtung 2 kann als Gehäuse, als Umspritzung, als Vergiessung oder als Lackierung ausgeführt sein und beinhaltet den Empfänger 10. Vorzugsweise beinhaltet die erste Haltevorrichtung 2 auch die erste Antenne 3 und die Energiequelle 12. Die Energiequelle 12 kann auch ausserhalb der ersten Haltevorrichtung 2 angeordnet sein. Es ist auch möglich, die erste Haltevorrichtung 2 in einer anderen Form auszuführen, welche ihren Inhalt fixiert und schützt.

Die Haltevorrichtungen 11,11a, 11b und 11c können als Umspritzung, als Vergiessung oder als Lackierung ausgeführt sein. Es ist auch möglich, diese Haltevorrichtungen in einer anderen Form auszuführen, welche ihren Inhalt fixiert und schützt.

Der Quader 1 dient nur der schematischen, perspektivischen Darstellung; er stellt einen menschlichen Oberkörper dar. Auf einer ersten linken Seite I des Quaders 1, welche der linken Körperseite entspricht, befinden sich eine erste Antenne 3 mit einem Ferritkern 4 und einer Wicklung 5, ein Empfänger 10 und gegebenenfalls die Energiequelle 12. Die erste Antenne 3, der Empfänger 10 und die Energiequelle 12 sind beispielsweise in einer ersten Haltevorrichtung 2 integriert. Die erste Haltevorrichtung 2 kann beispielsweise aus einem Kunststoff hergestellt ausgeführt sein. Die Energiequelle 12 kann auch ausserhalb der ersten Haltevorrichtung 2 angeordnet sein. Der Ferritkern 4 ist vertikal ausgerichtet, die Wicklung 5 der ersten Antenne 3 liegt in der horizontalen Ebene. Die Normale zur Fläche, welche durch die Wicklung 5 der ersten Antenne 3 eingeschlossen wird, ist vertikal ausgerichtet. Diese Wicklung 5 der ersten Antenne 3 wird auch im Sendebetrieb verwendet, um ein Ortungssignal abzustrahlen.

Auf einer zweiten, hinteren Seite II des Quaders 1, welche dem menschlichen Rücken entspricht, ist die Wicklung 6 einer zweiten Antenne angebracht. Diese Wicklung 6 besteht beispielsweise aus zehn Windungen, welche eine Fläche von 70 cm² einschliessen. Es ist auch möglich, eine andere Anzahl von Windungen zu verwenden. Die Normale zur Fläche, welche durch die Wicklung 6 dieser zweiten Antenne eingeschlossen wird, ist horizontal ausgerichtet Durch diese Anordnung ist die notwendige Entfernung der Wicklung 6 der zweiten Antenne vom Empfänger 10 gewährleistet.

Auf einer dritten, rechten Seite III des Quaders 1, welche der rechten Körperseite entspricht, ist die Wicklung 7 einer dritten Antenne angebracht. Diese Wicklung 7 besteht beispielsweise aus elf Windungen, welche eine Fläche von 40 cm² einschliessen. Es ist auch möglich, eine andere Anzahl von Windungen zu verwenden. Die Normale zur Fläche, welche durch die Wicklung 7 dieser dritten Antenne eingeschlossen wird, ist ebenfalls horizontal ausgerichtet und bildet mit der Normalen zur durch die Wicklung 6 eingeschlossenen Fläche der zweiten Antenne vorzugsweise einen rechten Winkel. Das von einem Sender ausgehende Magnetfeld kann somit in allen drei Dimensionen des Raumes vermessen werden. Durch diese Anordnung ist die notwendige Entfernung der Wicklung 7 der dritten Antenne vom Empfänger 10 gewährleistet.

Die auf einer ersten, linken Körperseite I und auf einer dritten, rechten Körperseite in getragenen Teile der erfindungsgemässen tragbaren Vorrichtung A können ohne Beeinträchtigung der Funktion vertauscht werden. Ebenso kann die Wicklung 6 der zweiten Antenne, welche auf dem Rücken angeordnet ist, durch eine Wicklung einer Antenne ersetzt werden, welche auf der Vorderseite des Oberkörpers getragen wird. Wesentlich für die Anordnung der Antennen ist, dass die Normalen zu den Flächen, welche durch die Wicklungen 5, 6 und 7 der jeweiligen Antennen eingeschlossen sind, zueinander orthogonal sind. Die Stärke des mit einer Wicklung einer Antenne empfangenen Signals ist proportional zum Cosinus des Winkels zwischen der Normalen zur Fläche, welche durch die Wicklung der Antenne eingeschlossen wird, und der Richtung der einfallenden, von einem Sender ausgehenden Feldlinien. Deshalb ergeben sich durch Abweichungen der Orthogonalität der Normalen zu den von den Wicklungen eingeschlossenen Flächen von ungefähr 20 Grad keine wesentlichen Fehler, welche die Gebrauchstüchtigkeit der Vorrichtung A negativ beeinflussen würden.

Die Wicklungen 6 und 7 der zweiten Antenne und der dritten Antenne sind mittels der aus jeweils zwei Leitern bestehenden Zuleitungen 8 und 9 mit dem Empfänger 10 verbunden. Um die Einkopplung von Störsignalen zu reduzieren, werden die jeweiligen beiden Leiter der Zuleitungen es und 9 mit einander verdrillt

Die Wicklungen 6 und 7 stellen je eine Induktivität dar. Die notwendigen Kondensatoren, welche zusammen mit den Wicklungen 6 und 7 zur Erzeugung einer Resonanz der Antennen bei der gewünschten Empfangsfrequenz von 457000 Hz benötigt werden, sind auf einer Leiterplatte des Empfängers 10 angeordnet. Die Kondensatoren können aber auch in der unmittelbaren Umgebung der Wicklungen 6 und 7 der zweiten Antenne und der dritten Antenne angeordnet sein.

Die erste Haltevorrichtung 2 und die Wicklungen 6 und 7 sowie deren Zuleitungen 8 und 9 sind in einer auf dem Körper getragenen Haltevorrichtung 11, 11a, 11b, 11c angeordnet, in einem Kleidungsstück, insbesondere in einem Hemd, in einer Weste, in einem Gurt, beispielsweise in der Form eines Nierengurtes, oder in einer Schutzvorrichtung, beispielsweise in einem Rückenpanzer. Die Befestigung der Wicklungen 6 und 7 an der Haltevorrichtung 11, 11a, 11b, 11c kann beispielsweise durch Einnähen oder durch Einschweissen oder durch Einkleben erfolgen. Es ist auch möglich, diese Wicklungen 6,7 oder die erste Haltevorrichtung 2 in einer Tasche eines Kleindungsstückes anzuordnen.

In einer bevorzugten Ausführungsform der vorliegenden Erfindung sind die Leiter der Wicklungen 6 und 7 der zweiten Antenne und der dritten Antenne aus Litzendraht angefertigt. Der Litzendraht hat den Vorteil, dass er flexibel ist und sich der Körperform eines Benutzers anpassen kann. Der Litzendraht hat ein sehr gutes Verhältnis von Oberfläche zu Querschnitt. Damit wird eine hohe Güte der Antennen erreicht, da die Wirkung des Skin-Effektes reduziert wird. Nachteilig bei dieser Ausführungsform sind die hohen Fertigungskosten und die Dicke der Wicklungen.

In einer weiteren Ausführungsform der vorliegenden Erfindung sind die Leiter der Wicklungen 6 und 7 der zweiten Antenne und der dritten Antenne als leitende Schichten auf einem flexiblen Trägermaterial ausgebildet. Diese Ausführungsform hat den Vorteil, dass sie sehr kostengünstig hergestellt werden kann und dass der Querschnitt der Wicklungen 6 und 7 minimal ist und somit den jeweiligen Benutzer praktisch nicht stört. Zur Minderung der ungünstigen Wirkung des Skin-Effektes können die Oberflächen der leitenden Schichten mit einem sehr gut leitenden Material, beispielsweise mit metallischem Silber, überzogen werden, beispielsweise mit einer Schichtdicke von 10 Mikrometer bis 100 Mikrometer.

Im Folgenden wird aufgezeigt, wie eine erfindungsgemässe tragbare Vorrichtung A eingesetzt werden kann. Zur Ortung eines von einer verschütteten Person getragenen Senders wird die erfindungsgemässe tragbare Vorrichtung A am Körper einer suchenden Person angebracht. Nach Einschalten des Empfängers 10 misst der Empfänger 10 die Intensität und die Phasenlage der in die Wicklungen 5, 6 und 7 der Antennen eingekoppelten, von einem zu ortenden Sender ausgehenden Signale.

Der Empfänger 10 beinhaltet einen Rechner und ist mit einer Anzeigeeinheit verbunden, Mittels trigonometrischer Berechnungen kann der Rechner aus dem Ausgangssignal des Empfängers 10 die Richtung der einfallenden Feldlinien berechnen und dem Benutzer zur Anzeige bringen. Die Intensität der in die Wicklungen 5, 6 und 7 der Antennen eingekoppelten, von einem zu ortenden Sender ausgehenden Signale kann auch zur Berechnung eines Schätzwertes für die Distanz zum zu ortenden Sender herangezogen werden.

In der vorliegenden Erfindung werden die folgenden Bezugszeichen verwendet:
- A: Tragbare Vorrichtung
- 1: Quader, der einen menschlichen Oberkörper darstellt
- 2: erste Haltevorrichtung
- 3: Erste Antenne
- 4: Ferritkern der ersten Antenne
- 5: Wicklung der ersten Antenne
- 6: Wicklung der zweiten Antenne
- 7: Wicklung der dritten Antenne
- 8: Zuleitung zur Wicklung der zweiten Antenne
- 9: Zuleitung zur Wicklung der dritten Antenne
- 10: Empfänger
- 11: gemeinsame zweite Haltevorrichtung der Wicklungen 6,7
- 11a: separate dritte Haltevorrichtung der Wicklung 6
- 11b: separate vierte Haltevorrichtung der Wicklung 7
- 11c: gemeinsame fünfte Haltevorrichtung für die Wicklungen 6 und 7 der zweiten Antenne und der dritten Antenne sowie für deren Zuleitungen 8 und 9, für den Empfänger 10, für die erste Antenne 3, sowie für die Energiequelle 12
- 12: Energiequelle.

## Patentansprüche

1. Tragbare Vorrichtung zum Suchen und/oder zur Ortung von Sendern, welche insbesondere von Personen oder Tieren getragen werden oder an Gegenständen befestigt sind, wobei diese tragbare Vorrichtung
- einen Empfänger (10), welcher mit einer Energiequelle (12), beispielsweise mit einem Akkumulator oder mit einer Batterie, verbunden ist, und
- wenigstens eine erste Antenne (3)
aufweist,
wobei der Empfänger (10) und die erste Antenne (3) vorzugsweise innerhalb einer ersten Haltevorrichtung (2) angeordnet sind,
wobei
- wenigstens eine der Wicklungen (6) und (7) einer zweiten Antenne und/oder einer dritten Antenne entfernt vom Empfänger (10) angeordnet ist (sind), und dass
- die Wicklungen (6) und (7) entweder
- in einer gemeinsamen zweiten Haltevorrichtung (11) oder
- je in einer separaten dritten Haltevorrichtung (11a) und in einer separaten vierten Haltevorrichtung (11b) oder
- in einer gemeinsamen fünften Haltevorrichtung (11c) zusammen mit dem Empfänger (10), der ersten Antenne (3) und der Energiequelle (12) angeordnet sind, wobei in diesem Falle die erste Haltevorrichtung (2) als Teil der fünften Haltevorrichtung (11c) ausgebildet ist,
**dadurch gekennzeichnet, dass**
die tragbare Vorrichtung in einem Kleidungsstück oder in einer auf dem Körper getragenen Schutzvorrichtung integriert ist,
wobei sich die erste Antenne (3) auf einer ersten Seite, welche einer ersten Körperseite entspricht, der auf dem Körper einer suchenden Person tragbaren Vorrichtung befindet,
und wobei auf einer zweiten Seite, welche einer zweiten Körperseite entspricht, der auf dem Körper tragbaren Vorrichtung die Wicklung (6) der zweiten Antenne angebracht ist, und wobei auf einer dritten Seite, welche einer dritten Körperseite entspricht, der auf dem Körper tragbaren Vorrichtung die Wicklung (7) der dritten Antenne angebracht ist.

2. Tragbare Vorrichtung nach Anspruch 1, **dadurch gekennzeichnet, dass** die Leiter der Wicklungen (6) und (7) der zweiten Antenne und der dritten Antenne aus Litzendraht angefertigt sind.

3. Tragbare Vorrichtung nach Anspruch 1, **dadurch gekennzeichnet, dass** die Leiter der Wicklungen (6) und (7) der zweiten Antenne und der dritten Antenne als leitende Schichten auf einem Trägermaterial, insbesondere auf einem flexiblen Trägermaterial, ausgebildet sind.

4. Tragbare Vorrichtung nach Anspruch 3, **dadurch gekennzeichnet, dass** die Oberflächen der leitenden Schichten mit einer Schicht aus metallischem Silber überzogen sind, beispielsweise mit einer Schichtdicke von 10 Mikrometer bis 100 Mikrometer.

5. Tragbare Vorrichtung nach einem der Ansprüche 1 bis 4, **dadurch gekennzeichnet,**
**dass** die tragbare Vorrichtung in ein Hemd, in eine Weste, in einen Gurt, insbesondere einen Nierengurt,
oder einen Rückenpanzer integriert ist.

6. Tragbare Vorrichtung nach einem der Ansprüche 1 bis 5, **dadurch gekennzeichnet,**
**dass** die Haltevorrichtung (11c) als umspritzte, oder als vergossene Haltevorrichtung oder als Lackierung ausgebildet ist.

7. Tragbare Vorrichtung nach einem der Ansprüche 1 bis 6, **dadurch gekennzeichnet,**
**dass** die Normalen zu den Ebenen der Wicklungen (6) und (7) der zweiten Antenne und der dritten Antenne orthogonal zueinander angeordnet sind, wobei bei dieser orthogonalen Anordnung Abweichungen von ±20 Grad zulässig sind.

8. Tragbare Vorrichtung nach einem der Ansprüche 1 bis 7, **dadurch gekennzeichnet,**
**dass** die Mittelpunkte der Flächen der Wicklungen (6) und (7) der zweiten Antenne und der dritten Antenne einen Abstand von wenigstens 15 cm, vorzugsweise von wenigstens 20cm, vom Empfänger (10) aufweisen.

9. Verwendung der tragbaren Vorrichtung nach einem der Ansprüche 1 bis 8 zum Suchen und/oder zur Ortung von Sendern, welche von Personen oder Tieren, insbesondere von verschütteten Personen oder Tieren, getragen werden oder an Gegenständen, insbesondere an verschütteten Gegenständen, befestigt sind.

## Claims

1. Portable apparatus for searching and/or locating transmitters, which are in particular carried by persons or animals or attached to objects, wherein this portable apparatus comprises
- a receiver (10) connected to an energy source (12), for example to an accumulator or to a battery, and
- at least a first antenna (3),
wherein the receiver (10) and the first antenna (3) are preferably disposed within a first retaining device (2),
wherein
- at least one of the windings (6) and (7) of a second antenna and/or a third antenna is disposed remote from the receiver (10), and that
- the windings (6) and (7) are disposed either
- in a common second retaining device (11) or
- each in a separate third retaining device (11a) and a separate fourth retaining device (11b) or
- in a common fifth retaining device (11c) together with the receiver (10), the first antenna (3) and the energy source (12), wherein the first retaining device (2) is formed as a part of the fifth retaining device (11c) in this case,
**characterized in that**
the portable apparatus is integrated in a piece of clothing or in a protective device carried on the body,
wherein the first antenna (3) is located on a first side corresponding to a first body side, of the apparatus portable on the body of a searching person,
and wherein the winding (6) of the second antenna is attached on a second side corresponding to a second body side, of the apparatus portable on the body, and wherein the winding (7) of the third antenna is attached on a third side corresponding to a third body side, of the apparatus portable on the body.

2. Portable apparatus according to claim 1, **characterized in that** the conductors of the windings (6) and (7) of the second antenna and the third antenna are manufactured from stranded wire.

3. Portable apparatus according to claim 1, **characterized in that** the conductors of the windings (6) and (7) of the second antenna and the third antenna are formed as conductive layers on a support material, in particular on a flexible support material.

4. Portable apparatus according to claim 3, **characterized in that** the surfaces of the conductive layers are coated with a layer of metallic silver, for example with a layer thickness of 10 micrometers to 100 micrometers.

5. Portable apparatus according to any one of claims 1 to 4, **characterized in that** the portable apparatus is integrated in a shirt, in a vest, in a belt, in particular a kidney belt, or a back protector.

6. Portable apparatus according to any one of claims 1 to 5, **characterized in that** the retaining device (11c) is formed as an overmolded or as a cast retaining device or as a varnish.

7. Portable apparatus according to any one of claims 1 to 6, **characterized in that** the normals to the planes of the windings (6) and (7) of the second antenna and the third antenna are arranged orthogonally to each other, wherein deviations of ± 20 degrees are allowable in this orthogonal arrangement.

8. Portable apparatus according to any one of claims 1 to 7, **characterized in that** the centers of the areas of the windings (6) and (7) of the second antenna and the third antenna have a distance of at least 15 cm, preferably of at least 20 cm, from the receiver (10).

9. Use of the portable apparatus according to any one of claims 1 to 8 for searching and/or locating transmitters, which are carried by persons or animals, in particular by buried persons or animals, or are attached to objects, in particular to buried objects.

## Revendications

1. Dispositif portable, destiné à rechercher et / ou à localiser des émetteurs, lesquels sont portés en particulier par des personnes ou des animaux ou sont fixés à des objets, ce dispositif portable présentant
- un récepteur (10), lequel est relié à une source d'énergie (12), à titre d'exemple à un accumulateur ou à une batterie et
- au moins une première antenne (3),
le récepteur (10) et la première antenne (3) étant agencés de préférence à l'intérieur d'un premier dispositif de retenue (2),
- au moins l'un des enroulements (6) et (7) et d'une deuxième antenne et / ou d'une troisième antenne, éloignée du récepteur (10), étant agencé(s) et que
- les enroulements (6) et (7) étant agencés soit
- dans un deuxième dispositif de retenue (11) commun soit
- chacun dans troisième dispositif de retenue (11a) séparé et dans un quatrième dispositif de retenue (11b) séparé, soit
- dans un cinquième dispositif de retenue (11c), commun avec le récepteur (10), de la première antenne (3) et de la source d'énergie (12), le premier dispositif de retenue (2) étant constitué, dans ce cas, en tant que partie du cinquième dispositif de retenue (11c), **caractérisé en ce que**
le dispositif portable est intégré dans un vêtement ou dans un dispositif de protection, porté sur le corps,
la première antenne (3) se trouvant sur un premier côté, lequel correspond à un premier côté du corps, du dispositif portable sur le corps de la personne, chargée de la recherche et
l'enroulement (6) de la deuxième antenne étant apposé sur un deuxième côté, lequel correspond à un deuxième côté du corps, du dispositif portable sur le corps et
l'enroulement (7) de la troisième antenne étant apposé sur un troisième côté, lequel correspond à un troisième côté du corps, du dispositif portable sur le corps.

2. Dispositif portable selon la revendication 1,
**caractérisé en ce que**
les conducteurs des enroulements (6) et (7) de la deuxième antenne et de la troisième antenne sont fabriqués en fil torsadé.

3. Dispositif portable selon la revendication 1,
**caractérisé en ce que**
les conducteurs des enroulements (6) et (7) de la deuxième antenne et de la troisième antenne sont constitués en tant que couches conductrices sur un matériau support, en particulier sur un matériau support flexible.

4. Dispositif portable selon la revendication 3,
**caractérisé en ce que**
les superficies des couches conductrices sont revêtues d'une couche d'argent métallique, à titre d'exemple d'une épaisseur de couche de 10 micromètres jusqu'à 100 micromètres.

5. Dispositif portable selon l'une des revendications 1 à 4,
**caractérisé en ce que**
le dispositif portable est intégré dans une chemise, dans une veste, dans une ceinture, en particulier dans une ceinture lombaire ou dans une protection dorsale.

6. Dispositif portable selon l'une des revendications 1 à 5,
**caractérisé en ce que**
le dispositif de retenue (11c) est constitué en tant que dispositif de retenue surmoulé ou coulé ou en tant que peinture.

7. Dispositif portable selon l'une des revendications 1 à 6,
**caractérisé en ce que**
les perpendiculaires aux plans des enroulements (6) et (7) de la deuxième antenne et de la troisième antenne sont agencées de manière orthogonale l'une par rapport à l'autre, des divergences de ± 20 degrés étant admises dans cet agencement orthogonal.

8. Dispositif portable selon l'une des revendications 1 à 7,
**caractérisé en ce que**
les points médians des surfaces des enroulements (6) et (7) de la deuxième antenne et de la troisième antenne présentent une distance d'au moins 15 cm, de préférence d'au moins 20 cm, par rapport au récepteur (10).

9. Utilisation du dispositif portable selon l'une des revendications 1 à 8, destiné à rechercher et / ou à localiser des émetteurs, lesquels sont portés par des personnes ou des animaux, en particulier par des personnes ou des animaux ensevelis ou sont fixés sur des objets, en particulier sur des objets ensevelis.
